# EUROPÄISCHE PATENTSCHRIFT

(11) **EP 3 153 295 B1**
(45) Veröffentlichungstag und Bekanntmachung des Hinweises auf die Patenterteilung: **24.07.2024**
(21) Anmeldenummer: 16192336.2
(22) Anmeldetag: 05.10.2016
(51) Int. Cl.: B29C 48/00, B29C 48/09, F16L 11/08

(54) **VERFAHREN ZUR HERSTELLUNG EINER ARMIERTEN FLEXIBLEN SCHLAUCHLEITUNG SOWIE SCHLAUCHLEITUNG**
METHOD FOR PRODUCING A REINFORCED FLEXIBLE HOSE AND HOSE
PROCÉDÉ DE PRODUCTION D'UN TUYEAU RENFORCÉ FLEXIBLE ET TUYEAU

(30) Priorität: 08.10.2015 DE 102015117167
(43) Veröffentlichungstag der Anmeldung: 12.04.2017
(73) Patentinhaber: REHAU Industries SE & Co. KG, 95111 Rehau (DE)
(72) Erfinder: Hübner, Christian, 95466 Weidenberg (DE); Yücel, Erdal, 95028 Hof (DE); Wazlawik, Klaus, 95030 Hof (DE); Glaser, Peter, 95111 Rehau (DE); Müller, Jörg, 95028 Hof (DE); Damberg, Jürgen, 95111 Rehau (DE); Görmer, Lutz, 95111 Rehau (DE); Michels, Peter, 95028 Hof (DE)

(56) Entgegenhaltungen:
- DE-A1- 102013 103 741
- GB-A- 2 004 619
- US-A- 3 945 867
- US-A- 4 444 700
- US-A1- 2008 110 519
- US-B1- 6 390 141

## Beschreibung

Die Erfindung betrifft ein Verfahren zur Herstellung und anschließenden Verwendung einer armierten flexiblen Schlauchleitung, welche einen polymeren extrudierten Grundschlauch sowie eine Armierungsschicht zur Erhöhung der mechanischen Belastbarkeit aufweist.

Die Erfindung betrifft eine Schlauchleitung, welche als Reinigungsschlauch für Fleischereien und Schlachthöfe eingesetzt wird. Bei derartigen Anwendungen wird durch die Schlauchleitung in der Regel Wasser mit relativ hoher Temperatur von beispielsweise 40 °C und mehr, z.B. 40 - 80 °C, bei hohem Druck von 30 bar und mehr, z.B. 30 bis 70 bar, transportiert. Die mechanische und thermische Belastung der hierfür eingesetzten Schlauchleitungen ist entsprechend hoch. Gemäß dem Stand der Technik werden daher für solche Anwendungen regelmäßig Schlauchleitungen eingesetzt, die über mindestens zwei Armierungslagen verfügen. Beispielsweise wird auf einen PVC-Grundschlauch eine erste Armierungsschicht aus Polyesterfäden gewickelt, welche von einer PVC-Zwischenschicht ummantelt wird. Darauf wird eine weitere Armierungsschicht aus Polyesterfäden gewickelt und abschließend eine äußere PVC-Schutzschicht aufextrudiert. Aufgrund der mehrlagigen Ausführung der Armierung sind solche Schläuche vergleichsweise teuer.

Die US 3 945 867 beschreibt einen Schlauch für sanitäre Anwendungen in der Lebensmittelindustrie bei vergleichsweise niedrigen Betriebsdrücken. In der DE 10 2013 103 741 A1 ist eine armierte Schlauchleitung offenbart, die beispielsweise für Wasserstrahl-Hochdruckreiniger verwendet wird. Die GB 2 004 619 A beschreibt eine armierte Schlauchleitung, welche durch zumindest teilweise Vulkanisierung hergestellt wird. In der US 2008/0110519 A1 ist ein vernetztes Polyethylenrohr mit Armierungsschicht offenbart. Die US 6 390 141 B1 zeigt eine Schlauchleitung für die Ölindustrie sowie für Offshore-Anwendungen mit einer Vielzahl von Einzelschichten sowie mehreren Armierungslagen.

Der Erfindung liegt die Aufgabe zugrunde, ein Verfahren zur Herstellung und anschließenden Verwendung einer armierten flexiblen Schlauchleitung anzugeben, welches einerseits eine hohe mechanische und thermische Belastbarkeit der Schlauchleitung gewährleistet und andererseits kostengünstig durchführbar ist.

Erfindungsgemäß wird diese Aufgabe gelöst durch ein Verfahren mit den Merkmalen des Patentanspruchs 1.

Durch die erfindungsgemäße Herstellung einer aus Klebstoffmaterial und Armierungsfäden bestehenden Hybrid-Schicht, bei der die Armierungsfäden während des Herstellvorgangs aufgrund der Verformbarkeit der Klebstoffschicht beim Einsinken entsprechende Fadenkanäle in der Klebstoffschicht bilden, sind die Armierungsfäden in der fertig hergestellten Schlauchleitung verrutschsicher in der erkalteten und daher festen Klebstoffschicht eingebettet. Die Armierungsfäden sind zwischen dem polymeren Grundschlauch und der Außenschicht durch die Fadenkanäle genau positioniert, aber dennoch beweglich, um sich an die Druckbeanspruchung anpassen und Biegungen ausgleichen zu können. Trotz der Einbettung der Armierungsfäden in der Klebstoffschicht ist die erfindungsgemäße Schlauchleitung sehr flexibel. Aufgrund der Einbettung der Armierungsfäden wird die Druckstabilität der in der Regel wickelarmierten Schlauchleitung insbesondere bei hohen Temperaturen deutlich erhöht. Dies führt dazu, dass erfindungsgemäß auf eine zweite Armierungsschicht, wie sie im Stand der Technik üblich ist, verzichtet werden kann.

Zweckmäßigerweise ist die Klebstoffschicht mit dem Grundschlauch coextrudiert. Hierdurch kann das Herstellverfahren weiter vereinfacht werden. Wie bereits erläutert, ist es bei der Verwirklichung der erfindungsgemäßen Lehre nicht erforderlich, eine weitere Armierungsschicht vorzusehen. In diesem Zusammenhang hat es sich insbesondere als vorteilhaft erwiesen, dass als Armierungsfäden Aramidfäden verwendet werden. Aramid ist ein mechanisch sehr hoch belastbares Material, welches sich insbesondere für Fadenarmierungen eignet. Zweckmäßigerweise werden die Aramidfäden auf die noch warme und daher verformbare Klebstoffschicht im Wege eines Wicklungsvorgangs aufgebracht. In diesem Zusammenhang ist insbesondere von Bedeutung, dass Aramidfäden wärmeschrumpffrei sind. Die im Stand der Technik häufig verwendeten Polyesterfäden weisen hingegen einen ausgeprägten Wärmeschrumpf auf. Dies bedeutet, dass sich aufgrund des prozessbedingten Wärmeeintrages während der Herstellung der Schlauchleitungen die Polyesterfäden aufgrund der Wärmeeinwirkung zusammenziehen und hierdurch einen festen Verbund um den Grundschlauch herum bilden. Dies ist bei den Aramidfäden aufgrund des fehlenden Wärmeschrumpfes nicht der Fall. Von daher ist es beim Einsatz der mechanisch sehr hoch belastbaren Aramidfäden von besonderer Bedeutung, diese auch ohne Unterstützung durch einen Wärmeschrumpf dauerhaft exakt auf dem Grundschlauch zu positionieren, so dass die Aramidfäden während des Gebrauches der Schlauchleitung nicht verrutschen und somit dauerhaft ihre volle druckstabilisierende Wirkung entfalten können. Dies wird erfindungsgemäß durch das Einsinken der Armierungsfäden in die verformbare Klebstoffschicht und der Ausbildung einer Hybrid-Schicht gewährleistet.

Im Rahmen der Erfindung liegt es insbesondere, dass sämtliche Verfahrensschritte in einem gemeinsam kontinuierlichen Fertigungsverfahren durchgeführt werden. In diesem Zusammenhang ist es insbesondere zweckmäßig, die Armierungsschicht aufzuwickeln. Im Vergleich zu einem Flechtvorgang sind beim Wickeln wesentlich höhere Prozessgeschwindigkeiten möglich, so dass der Wickelvorgang mit der gleichen Prozessgeschwindigkeit wie die Extrusion und somit "online" durchgeführt werden können.

Erfindungsgemäß wird als polymeres Material für den Grundschlauch und / oder die Außenschicht PVC verwendet. Das PVC-Material oder ganz allgemein das polymere Material kann einen Weichmacher enthalten, um die gewünschte Flexibilität sicherzustellen. Hierbei können insbesondere phthalatfreie Weichmacher, wie beispielsweise DEHT, DOTP, DINCH, Sojaöl oder dergleichen verwendet werden. Zweckmäßigerweise bildet der Grundschlauch die innerste Schicht der Schlauchleitung.

Erfindungsgemäß tauchen die Armierungsfäden bei der Bildung der Hybrid-Schicht vollständig in die Klebstoffschicht ein. Hierdurch ist gewährleistet, dass auch die äußere Oberfläche der Armierungsschicht vom Klebstoff bedeckt ist, wodurch die Positionierung der Armierungsfäden durch die Klebstoffschicht noch weiter verbessert wird. Ferner wird hierdurch die Anbindung der Hybrid-Schicht an die Außenschicht verbessert.

Die so hergestellte Schlauchleitung wird weiterhin erfindungsgemäß in Fleischerei- und Schlachtbetrieben zum Transport von warmem, unter relativ hohem Druck stehenden Reinigungswasser eingesetzt. In diesem Zusammenhang ist es in der Regel erforderlich, vergleichsweise große Wassermengen zu transportieren. Die Schlauchleitungen müssen daher einen entsprechend großen Innendurchmesser, beispielsweise ½", aufweisen. Zweckmäßigerweise wird daher die Schlauchleitung mit einem freien Innendurchmesser von mindestens 10 mm hergestellt.

Um ein möglichst kostengünstiges Herstellverfahren zu gewährleisten, besteht die Schlauchleitung weiterhin erfindungsgemäß lediglich aus Grundschlauch, Hybrid-Schicht und Außenschicht, wobei die Hybrid-Schicht - wie bereits ausführlich erläutert - aus der Klebstoffschicht sowie der darin integrierten Armierungsschicht besteht. Als Material für die Klebstoffschicht wird zweckmäßigerweise ein Polyurethan (PUR), insbesondere ein thermoplastisches Polyurethan (TPU) verwendet.

Im Folgenden wird die Erfindung anhand einer lediglich ein Ausführungsbeispiel darstellenden Zeichnung ausführlich erläutert. Es zeigen schematisch:
- Fig. 1: einen Querschnitt durch eine erfindungsgemäße Schlauchleitung;
- Fig. 2: eine Längsansicht der in Fig. 1 dargestellten Schlauchleitung und
- Fig. 3: ein erfindungsgemäßes Verfahren zur Herstellung einer Schlauchleitung wie in Fig. 1, 2 dargestellt.

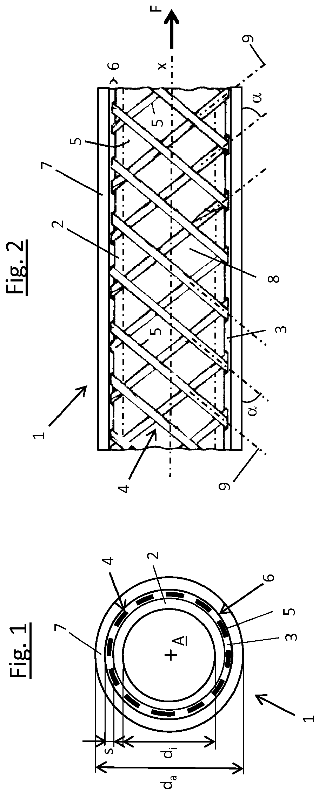

In der Fig. 1 ist eine erfindungsgemäße armierte flexible Schlauchleitung 1 im Querschnitt dargestellt. Diese dient im Ausführungsbeispiel zum Transport von Reinigungswasser F (s. Fig. 2) unter vergleichsweise hohen Temperaturen und Drücken (z.B. 40 bis 80 °C und 30 bis 70 bar) in Fleischereien oder Schlachthöfen. Die flexible Schlauchleitung 1 weist einen extrudierten polymeren Grundschlauch 2 als Innenschicht auf. Der Grundschlauch 2 besitzt einen freien Innendurchmesser von dᵢ = 12,5 mm, welcher den freien Störmungsquerschnitt Ader Schlauchleitung 1 definiert. Entsprechend wird die Innenoberfläche des Grundschlauches 2 mit dem zu transportierenden Fluid F beaufschlagt. Der Fig. 1 ist ferner zu entnehmen, dass auf den Grundschlauch 2 eine Klebstoffschicht 3 aufgetragen ist. In diese Klebstoffschicht 3 ist eine fadenförmige Armierungsschicht 4 eingebettet, welche aus um den Grundschlauch 2 gewickelten Armierungsfäden 5 aus wärmeschrumpffreiem Aramid aufgebaut ist. Die Aufwicklung der Armierungsfäden 5 erfolgte während eines noch verformbaren Zustandes der bei der Herstellung vorerwärmten Klebstoffschicht 3, so dass die Armierungsfäden 5 beim Aufwickeln in die Klebstoffschicht 3 eingesunken und damit - wie in Fig. 1 erkennbar - in die Klebstoffschicht 3 eingebettet sind. Die Armierungsfäden 5 bilden gemeinsam mit der Klebstoffschicht 3 in der fertig hergestellten Schlauchleitung 1 eine Hybrid-Schicht 6. Auf diese Hybrid-Schicht 6 ist eine polymere Außenschicht 7 aufextrudiert. Der Außendurchmesser dₐ der Außenschicht 7 beträgt im Ausführungsbeispiel 20 bis 25 mm. Die Schichtdicke s der Hybrid-Schicht 6 beträgt im Ausführungsbeispiel 0,5 bis 1,5 mm.

Fig. 2 zeigt die in Fig. 1 im Querschnitt dargestellte Schlauchleitung 1 in einer Längsansicht. Es ist erkennbar, dass die Armierungsschicht 4 als offene Armierung ausgebildet ist und entsprechend zwischen den einzelnen gewickelten Armierungsfäden 5 Freiräume 8 verbleiben. Erfindungsgemäß sind diese Freiräume 8 - wie vorstehend beschrieben - herstellungsbedingt aufgefüllt mit Klebstoffmaterial. Im verfestigten Zustand bildet somit die Klebstoffschicht 3 Kanäle, die von den mit Klebstoff aufgefüllten Freiräumen 8 berandet sind. Innerhalb dieser Kanäle sind die Armierungsfäden 5 genau positioniert. Wie der Fig. 2 ferner zu entnehmen ist, sind die Armierungsfäden 5 schräg zur Schlauchlängsachse x ausgerichtet und bilden hierbei Diagonallinien 9. Diese schließen mit der Schlauchlängsachse x einen Winkel α von 44 bis 64°, z.B. 50 bis 58°, ein. Der Grundschlauch 2 und auch die Außenschicht 7 bestehen im Ausführungsbeispiel aus weichgemachtem PVC. Wie der Fig. 1 zu entnehmen ist, tauchen die Armierungsfäden 5 vollständig in die Klebstoffschicht 3 ein und sind somit entsprechend von der Klebstoffschicht 3 vollständig umschlossen. Ferner ist erkennbar, dass die Schlauchleitung 1 lediglich aus Grundschlauch 2, Hybrid-Schicht 6 und Außenschicht 7 besteht. Als Material für die Klebstoffschicht 3 wird ein TPU verwendet.

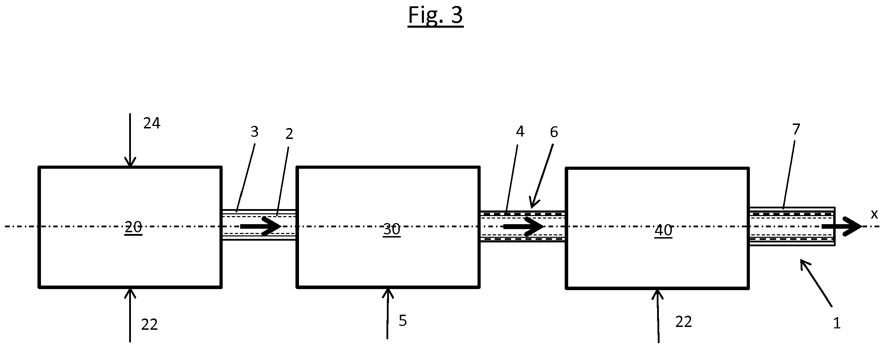

Die Fig. 3 zeigt ein erfindungsgemäßes Verfahren zur Herstellung der armierten flexiblen Schlauchleitung 1 gemäß den Figuren 1 und 2. Zunächst wird einem ersten Extruder 20 sowohl das PVC-Material 22 für den Grundschlauch 2 als auch das TPU-Klebstoffmaterial 24 für die Klebstoffschicht 3 zugeführt. Im Extruder 20 werden entsprechend der PVC-Grundschlauch 2 und die auf den Grundschlauch 2 aufgetragene TPU-Klebstoffschicht 3 coextrudiert. Durch diesen Prozess wird die Klebstoffschicht 3 vorerwärmt. In der darauffolgenden Wickelstation 30 wird auf die noch warme und daher verformbare Klebstoffschicht 3 die fadenförmige Armierungsschicht 4 aufgewickelt. Hierzu werden dieser Station 30 die Armierungsfäden 5 aus Aramid zugeführt. Aufgrund der Verformbarkeit der Klebstoffschicht 3 sinken die Armierungsfäden 5 bei ihrer Aufwicklung vollständig in die Klebstoffschicht 3 ein, so dass die Armierungsfäden 5 gemeinsam mit der Klebstoffschicht 3 die in der Fig. 1 deutlich erkennbare Hybrid-Schicht 6 bilden. Danach wird durch Zuführung desselben PVC-Materials 22 in einem zweiten Extruder 40 auf die Hybrid-Schicht 6 die PVC-Außenschicht 7 aufextrudiert. Einer Gesamtbetrachtung der Fig. 3 ist zu entnehmen, dass sämtliche Verfahrensschritte in den Stationen 20, 30 und 40 in einem gemeinsam kontinuierlichen Fertigungsverfahren durchgeführt werden und die Schlauchleitung 1 lediglich aus Grundschlauch 2, Hybrid-Schicht 6 und Außenschicht 7 besteht, wobei die Hybrid-Schicht 6 aus der Klebstoffschicht 3 und den darin eingebetteten Armierungsfäden 5 besteht. Die so hergestellte Schlauchleitung 1 wird dann in nachfolgenden, nicht dargestellten Nachbehandlungseinheiten (Abkühlung, Kalibrierung, etc.) fertiggestellt.

## Patentansprüche

1. Verfahren bestehend aus
a) einem Verfahren zur Herstellung einer armierten flexiblen Schlauchleitung (1) und
b) einer daran anschließenden Verwendung der mit diesem Verfahren hergestellten Schlauchleitung (1),
wobei a) beim Verfahren zur Herstellung der Schlauchleitung (1)
- ein polymerer Grundschlauch (2) extrudiert wird,
- auf den Grundschlauch (2) eine vorerwärmte Klebstoffschicht (3) aufgetragen wird,
- auf die noch warme und daher verformbare Klebstoffschicht (3) eine fadenförmige Armierungsschicht (4) aufgetragen, vorzugsweise aufgewickelt, wird und die Armierungsfäden (5) hierbei aufgrund der Verformbarkeit der Klebstoffschicht (3) in diese einsinken, so dass die Armierungsfäden (5) gemeinsam mit der Klebstoffschicht (3) eine Hybrid-Schicht (6) bilden,
- wobei die Armierungsfäden (5) bei der Bildung der Hybrid-Schicht (6) vollständig in die Klebstoffschicht (3) eintauchen,
- wobei danach auf die Hybrid-Schicht (6) eine polymere Außenschicht (7) aufextrudiert wird,
- wobei als polymeres Material (22) für den Grundschlauch (2) und die Außenschicht (7) PVC verwendet wird, und
- wobei die so hergestellte Schlauchleitung (1) lediglich aus Grundschlauch (2), Hybrid-Schicht (6) und Außenschicht (7) besteht, und
wobei b) die Schlauchleitung (1) nach ihrer Fertigstellung zum Transport von Reinigungswasser (F) mit Temperaturen von 40 bis 80 °C und Drücken von 30 bis 70 bar in Schlachthöfen oder Fleischereien verwendet wird.

2. Verfahren nach Anspruch 1, **dadurch gekennzeichnet, dass** die Klebstoffschicht (3) mit dem Grundschlauch (2) koextrudiert wird.

3. Verfahren nach Anspruch 1 oder 2, **dadurch gekennzeichnet, dass** als Armierungsfäden (5) Aramidfäden verwendet werden.

4. Verfahren nach einem der Ansprüche 1 bis 3, **dadurch gekennzeichnet, dass** sämtliche Verfahrensschritte in einem gemeinsamen kontinuierlichen Fertigungsverfahren durchgeführt werden.

5. Verfahren nach einem der Ansprüche 1 bis 4, **dadurch gekennzeichnet, dass** die Schlauchleitung (1) mit einem freien Innendurchmesser (dᵢ) von mindestens 10 mm hergestellt wird.

6. Verfahren nach einem der Ansprüche 1 bis 5, **dadurch gekennzeichnet, dass** als Material (24) für die Klebstoffschicht (3) ein PUR, insbesondere ein TPU, verwendet wird.

## Claims

1. Method, consisting of
a) a method for producing a reinforced flexible hose line (1)
and
b) a subsequent use of the hose line (1) produced by said method,
wherein a) in the method for producing the hose line (1)
- a polymeric basic hose (2) is extruded,
- a pre-heated adhesive layer (3) is applied to the basic hose (2),
- a thread-type reinforcing layer (4) is applied, preferably wound onto the still hot and therefore deformable adhesive layer (3) and the reinforcing threads (5) in this case sink into the adhesive layer (3) due to its deformability, such that the reinforcing layers (5) for a hybrid layer (6) together with the adhesive layer (3),
- wherein the reinforcing threads (5) completely immerse in the adhesive layer (3) when forming the hybrid layer (6),
- wherein thereafter a polymeric outer layer (7) is extruded onto the hybrid layer (6),
- wherein PVC is used as the polymeric material (22) for the basic hose (2) and the outer layer (7),
- wherein the hoseline (1) produced this way merely consists of basic hose (2), hybrid layer (6) and outer layer (7),
and
wherein b) after being finished, the hose line (1) is used for transporting cleaning water (F) of temperatures of 40 to 80°C and pressures of 30 to 70 bar in slaughterhouses or butcheries.

2. The method according to Claim 1, **characterized in that** the adhesive laxer (3) is coextruded with the basic hose (2).

3. The method according to Claim 1 or 2, **characterized in that** aramid threads are used as the reinforcing threads (5).

4. The method according to one of Claims 1 to 3, **characterized in that** all method steps are performed in a joint, continuous manufacturing method.

5. The method according to one of Claims 1 to 4, **characterized in that** the hose line (1) is produced with a clear inner diameter (dᵢ) of at least 10 mm.

6. The method according to one of Claims 1 to 5, **characterized in that** a PUR, in particular a TPU is used as the material for the adhesive layer (3).

## Revendications

1. Procédé constitué de
a) un procédé de production d'un tuyau (1) flexible renforcé
et
b) une utilisation subséquente à celui-ci du tuyau (1) produit par ce procédé,
dans lequel a) lors du procédé de production du tuyau (1)
- un tuyau de base (2) polymère est extrudé,
- une couche de matière adhésive (3) préchauffée est appliquée sur le tuyau de base (2),
- une couche de renforcement (4) filiforme est appliquée, de préférence enroulée, sur la couche de matière adhésive (3) encore chaude et par conséquent déformable, et les fils de renforcement (5) s'enfoncent alors dans ladite couche de matière adhésive (3) en raison de la déformabilité de celle-ci, de telle sorte que les fils de renforcement (5) forment, conjointement avec la couche de matière adhésive (3), une couche hybride (6),
- dans lequel les fils de renforcement (5) s'immergent entièrement dans la couche de matière adhésive (3) lors de la formation de la couche hybride (6),
- dans lequel une couche extérieure (7) polymère est ensuite extrudée sur la couche hybride (6),
- dans lequel du PVC est utilisé comme matériau polymère (22) pour le tuyau de base (2) et la couche extérieure (7), et
- dans lequel le tuyau (1) ainsi produit est constitué uniquement du tuyau de base (2), de la couche hybride (6) et de la couche extérieure (7), et
dans lequel b) le tuyau (1), après sa production, est utilisé pour le transport d'eau de nettoyage (F) à des températures allant de 40 à 80 °C et des pressions allant de 30 à 70 bar dans des abattoirs ou des boucheries.

2. Procédé selon la revendication 1, **caractérisé en ce que** la couche de matière adhésive (3) est coextrudée avec le tuyau de base (2).

3. Procédé selon la revendication 1 ou 2, **caractérisé en ce que** des fils d'aramide sont utilisés comme fils de renforcement (5).

4. Procédé selon l'une des revendications 1 à 3, **caractérisé en ce que** toutes les étapes de procédé sont effectuées dans un procédé de fabrication continu commun.

5. Procédé selon l'une des revendications 1 à 4, **caractérisé en ce que** le tuyau (1) est produit avec un diamètre intérieur libre (dᵢ) d'au moins 10 mm.

6. Procédé selon l'une des revendications 1 à 5, **caractérisé en ce qu'**un PUR, en particulier un TPU, est utilisé comme matériau (24) pour la couche de matière adhésive (3).
